# EUROPEAN PATENT APPLICATION

(11) **EP 1 488 860 A2**
(43) Date of publication of application: **22.12.2004**
(21) Application number: 04009864.2
(22) Date of filing: 26.04.2004
(51) Int. Cl.: B05D 7/22, B05D 7/16

(54) **Pipe renovating method**

(30) Priority: 09.06.2003 GB 0313274
(71) Applicant: E. Wood Limited, Northallerton, North Yorkshire DL6 2XA (GB)
(72) Inventor: Robinson, Ian, North Yorkshire DL07 8RH (GB)
(74) Representative: Carstairs, J. C.

(57) **Abstract**

A method of renovating an existing pipeline comprises spray-coating the interior of the pipeline using a two part coating system of which the two parts are mixed at the time of application. One part of the system comprises a polyisocyanate whilst the second part comprises one or more oligomeric polyamines, optionally further blended with a secondary aliphatic polyamine, or the second part comprises one or more aromatic polyamines blended with one or more polyols. The mixture forms a coating on the interior surface of the pipeline and forms, at a high cure rate, a monolithic flexible lining which exhibits high strength and a high level of adhesion to the pipe wall.

## Description

### FIELD OF INVENTION

THE PRESENT INVENTION relates to a method for the renovation of existing pipeline infrastructures. More particularly, the present invention relates to a method for the renovation of existing cast or ductile iron gas pipelines by means of the application of a liquid, two part coating composition to the internal surface of the pipeline.

### BACKGROUND OF THE INVENTION

Existing trenchless rehabilitation and renovation methods for cracked iron gas pipes (or pipes likely to be susceptible to cracking) rely on the insertion or bonding of a moulded material, such as a polyethylene pipe or hose liner, inside an existing pipe. The three main trenchless technologies employed for this purpose can be summarised according to the following:

### Pipe in Pipe Method

A moulded (e.g. polyethylene) pipe with a diameter smaller than that of the existing pipe is either pulled or pushed into the existing pipe. By virtue of being an extremely simple method, it has been used not only to renovate gas pipes, but many other types of pipeline infrastructure. However, the method does have its shortcomings. For example, as insertion resistance increases over long spans, the length and complexity of pipes which can be treated in this way is limited. Furthermore, it is also necessary to consider the reduction in supply capacity of a pipe renovated by this method due to the fact that the bore diameter of internally inserted pipe is necessarily less than that of the original pipe.

### Pipe Bursting Method

The Pipe Bursting Method, as the name implies, is executed by expansion and cracking of the existing pipe by insertion of a hydraulic expander inside it, accompanied by insertion of a new pipe into the space thus formed. Benefits of this method are the simplicity of use and the ability to install pipes with a diameter equivalent to or larger than that of the original pipe. However, disadvantages are the potential damage to other infrastructures in urban environments, and the difficulty in disposing of residual pipe fragments.

### Cured in Place Method

In this method, an inverted, resin impregnated hose liner is inserted into the existing pipe and pressure applied to the lining material to reverse it and bond it to the inside of the existing pipe. In addition, heat may be required to complete the cure of the liner.

All three of the above methods are disadvantaged by their inability to deal with multiple bends in a pipeline and, more importantly, the fact that lateral connection pipes to customers' premises have to be disconnected and then reinstated after execution of the renovation process.

A need, therefore, exists for a renovation method, which has the capability to accommodate long pipe spans (up to 200 meters) and pipe bends, and which obviates the necessity for reinstatement of lateral connection pipes.

### SUMMARY OF THE INVENTION

The present invention provides a two-part coating system that can be applied to the internal surfaces of existing pipeline infrastructures so as to form, at a high cure rate, a monolithic flexible lining, which exhibits high strength and a high level of adhesion to the existing pipe wall. By virtue of its strength, flexibility and adhesive characteristics, the system of the present invention is particularly useful for the renovation of cast or ductile iron gas pipelines.

According to the present invention there is provided a method of forming a coating on the internal surface of a cast or ductile iron gas pipeline, the method of comprising the steps of:
a) providing a liquid, two-part coating system
b) mixing together the first part and the second part to form a mixture
c) applying the mixture as a coating to said surface so as to form, at high cure rate, a monolithic, flexible lining which exhibits high strength and a high level of adhesion to the pipe wall.

Preferably the two parts of the system are applied through heated airless spray equipment. Such equipment may, for example, include a centrifugal spinning head or a self-mixing spray gun assembly.

The first part of a two-part coating system, in preferred embodiments of the present invention, comprises one or more polyisocyanates. Both aliphatic and aromatic polyisocyanates may be employed.

Preferably the polyisocyanate is derived from hexamethylene diisocyanate (HDI).

Preferred aliphatic polyisocyanates include the dimeric, trimeric or biuretic forms of hexamethylene-1,6-diisocyanate, typically having an isocyanate content of 15-30%. Other useful aliphatic polyisocyanates include derivatives of 2,2,4-trimethylhexamethylene diisocyanate.

The polyisocyanate may comprise the uretdione of HDI or may comprise the isocyanurate trimer of HDI.

A variety of aromatic polyisocyanates may be employed, with the most preferred being 4,4'-diphenylmethane diisocyanate (MDI) or its derivatives. As pure MDI is a solid and thus inconvenient to use, liquid MDI products resulting from uretonimine or carbodiimide modification are to be preferred. Alternatively, quasi-propolymers formed from the reaction of MDI or modified MDI with polyhydric alcohols may be employed. The preferred aromatic polyisocyanates typically have an isocyanate content of 15-35%.

The polyisocyanate may comprise a quasi-prepolymer formed from the reaction of MDI, or modified MDI, with a polyhydric alcohol.

Preferably the second part of this two part coating system comprises a polyamine chain extender blended with one or more oligomeric polyamines, optionally further blended with a secondary aliphatic polyamine. Alternatively, polyhydric alcohol compounds ("polyols") may be substituted in place of the oligomeric polyamine(s).

Thus the coating system may be such that the second part of the liquid coating system comprises one or more aromatic polyamines blended with one or more polyhydric alcohol compounds (polyols).

Suitable chain extenders include aromatic polyamines or low molecular weight polyoxyalkylene polyamines, with aromatic polyamines being preferred. Useful aromatic polyamines include diethyl toluenediamine; dimethylthio toluenediamine; 4,4'-methylenebis (2-isopropyl-6-methylaniline); 4,4'-methylenebis (2,6-diisopropylaniline); 4,4'-methlenebis (3-chloro-2,6-diethyaniline). For the purposes of the present invention, diethyl toluenediamine is particularly preferred.

Suitable oligomeric polyamines include poly (oxypropylene) diamines, poly (oxypropylene) triamines and poly (oxytetramethylene)-di-p-aminobenzoates. For the purposes of the present invention, the preferred compounds are poly (oxypropylene) diamines having a molecular weight in the range 400-5000.

N,N'-di-tert-butylethylenediamine is particularly preferred as the secondary aliphatic polyamine.

Suitable polyhydric alcohol compounds include polyester and polyether polyols and polyether-ester polyols with a hydroxyl content of typically 2-10%.

Conveniently said second part comprises a blend of diethyl toluenediamine and poly(oxypropylene )diamine.

Advantageously said second part comprises a blend of diethyl toluene diamine and poly(oxytetramethylene)-di-p- aminobenzoate of approximately 800 molecular weight.

Preferably said blend comprises from 20 to 50 % by weight of diethyl toluenediamine.

Conveniently said second part comprises a blend of dimethylthio toluenediamine and poly(oxypropylene)diamine of approximately 2000 molecular weight.

Advantageously said second part comprises a blend of dimethylthio toluenediamine and poly(oxytetramethylene)-di-p- aminobenzoate.

Conveniently said blend comprises from 20 to 50 % by weight of dimethylthio toluenediamine.

Preferably said second part comprises a blend of diethyl toluenediamine, poly(oxypropylene )diamine of approximately 2000 molecular weight and N,N'-di-tert-butylethylenediamine.

Advantageously said second part comprises 30-40% by weight diethyl toluenediamine, 50 to 65%by weight poly(oxypropylene)diamine of approximately 2000 molecular weight and 5 to 10% by weight N,N'-di-tert-butylethylenediamine.

In a further embodiment of the invention said second part comprises a blend of diethyl toluenediamine and polyether-ester polyol.

In another embodiment of said second part comprises a blend of diethyl toluenediamine, poly(oxypropylene )diamine and poly (oxypropylene) triamine.

Conveniently said second part comprises 20-35% by wt. of diethyl toluenediamine, 20 -35% by wt. poly(oxypropylene )diamine of approximately 2000 molecular weight and 35 -55% by wt.poly (oxypropylene) triamine, of approx. 5000 molecular weight

Advantageously said second part comprises a blend of dimethylthio toluenediamine, poly(oxypropylene )diamine and poly (oxypropylene) triamine.

Preferably said second part comprises 20-35% by wt. of dimethylthio toluenediamine, 20-35% by wt. poly(oxypropylene)diamine of approximately 2000 molecular weight and 35 -55% by wt.poly (oxypropylene) triamine, approx. 5000 molecular weight.

Conveniently, in another embodiment of the invention, said second part comprises a blend of diethyl toluenediamine, poly(oxypropylene )diamine , poly (oxypropylene) triamine, and N,N'-di-tert-butylethylenediamine.

Advantageously said second part comprises 20-35% by wt. of diethyl toluenediamine, 20-35% by wt.poly(oxypropylene )diamine of approximately 2000 molecular weight, 20-35% by wt.poly (oxypropylene) triamine, approx. 5000 molecular weight and 5-10% by wt.N,N'-di-tert-butylethylenediamine.

### DETAILED DESCRIPTION OF THE INVENTION

A number of two-part systems which may be used in carrying out the invention are described below, by way of non-limiting example, with reference to Tables 1 to 9 which form the accompanying drawings.

In carrying out the method of the invention, the first and second parts of the system are fed independently, e.g. by flexible pipelines, to a spraying apparatus, known per se, capable of being propelled through an existing pipeline to be renovated. The apparatus preferably heats the two parts of the system prior to application to the pipeline interior and mixes the two parts immediately before applying the mixture to the interior surface of the pipeline. The mixture of the two parts cures on the interior surface of the pipeline to form a flexible impervious coating.

In view of the confined spaces within the pipeline and the resultant lack of suitable outlet for vapour, both the first part and the second part of the system, in each case, are free of any volatile solvent. That is to say, solidification of the system applied to the pipeline interior is in no way a result of drying or evaporation of solvent from either part of the system.

In each of the examples illustrated, the first part of the system comprises an isocyanate, for example DESMODUR N3400 or DESMODUR N3600 or ISONATE 143L, as indicated by the following brief notes referring to the Tables, whilst the second part of the system comprises a blend of the components indicated in the first three columns to the left of each table. In each of Tables 1 to 9, the column at the extreme right indicates, the amount of the isocyanate first part used. The quantities indicated in the tables are parts by weight.

### EXAMPLES

**Table 1** shows the physical properties of coating systems prepared from binary mixtures comprising an aromatic polyamine (Ethacure 100) and selected oligomeric polyamines, cured with Desmodur N3400 at an isocyanate index of 1.0.

**Table 2** shows the physical properties of coating systems prepared from binary mixures comprising an alternative aromatic polyamine (Ethacure 300) and selected oligomeric polyamines, cured with Desmodur N3400 at an isocyanate index of 1.0.

It can be seen from the results that the slower reacting Ethacure 300 offers some increase in adhesive performance, but at the expense of tensile and flexural properties.

**Table 3** shows the physical properties of coating systems prepared from the polyamine mixtures detailed in Table 2, but cured with Desmodur N3600 (isocyanate index = 1.0).

It can be seen from these results that the trimeric hexamethylene-1,6-diisocyanate affords enhanced strength properties, but at the expense of ductility.

**Table 4** shows the physical properties of coating systems prepared from ternary mixtures comprising Ethacure 100, Jeffamine D2000 and a secondary aliphatic polyamine (Amine SDA 172).

By reference to the proceeding tables it can be seen that the inclusion of the secondary aliphatic amine enhances the adhesive performance of the systems detailed in Table 1 without any trade-off in strength properties or ductility.

**Table 5** shows the physical properties of coating systems prepared from binary mixtures comprising an aromatic polyamine (Ethacure 100) and selected branched polyether-ester polyols cured with Desmadur N3400 at an isocyanate index of 1.0.

**Table 6** shows the physical properties of coating systems prepared from ternary mixtures comprising an aromatic polyamine (Ethacure 100) and selected poly(oxypropylene) polyamines, cured with an aromatic polyisocyanate (Isonate 143L) at an isocyanate index of 1.0.

**Table 7** shows the physical properties of coating systems prepared from ternary mixtures comprising an alternative aromatic polyamine of lower reactivity (Ethacure 300) and selected poly(oxypropylene) polyamines, cured with Isonate 143L (isocyanate index = 1.0).

**Table 8** shows the physical properties of coating systems prepared from ternary mixtures of Ethacure 100 and poly(oxypropylene) polyamines, modified by the inclusion of a secondary aliphatic polyamine, cured with Isonate 143L (isocyanate index = 1.0).

**Table 9** shows the physical properties of coating systems prepared from binary mixtures comprising Ethacure 100 and branched polyether-ester polyols cured with Isonate 143L (isocyanate = 1.0).

In the accompanying Tables, the various components of the system are identified by trade names or Trade Marks of particular manufacturers or suppliers. The following glossary indicates the manufacturer or supplier concerned in each case and identifies the respective components by their chemical names.

| **GLOSSARY OF MATERIALS AND TEST PROCEDURES** | |
|---|---|
| ETHACURE 100 - | Diethyl toluenediamine : Albermarle Corporation |
| ETHACURE 300 - | Dimethylthio toluenediamine : Albermarle Corporation |
| JEFFAMINE D2000 - | Poly (oxypropylene) diamine, approx. 2000 molecular weight: Huntsman |
| JEFFAMINE D5000 - | Poly (oxypropylene) triamine, approx. 5000 molecular weight: Huntsman |
| VERSALINK P-650 - | Poly (oxytetramethylene)-di-p-aminobenzoate, approx. 800 molecular weight: Air Products and Chemicals Inc. |
| AMINE SDA 172 - | N,N'-di-tert-butylethylenediamine : Nitroil GmbH |
| DESMOPHEN 1150 - | Polyether-ester polyol, hydroxyl content approx. 5.4%: Bayer |

| | |
|---|---|
| SOVERMOL 805 - | Polyether-ester polyol, hydroxyl content approx. 5.4%: Cognis GmbH |
| SOVERMOL 815 - | Polyether-ester polyol, hydroxyl content approx. 6.0%: Cognis GmbH |
| DESMODUR N3400 - diisocyanate, | Uretdione of hexamethylene-1,6-isocyanate content approx. 22% : Bayer |
| DESMODUR N3600 - | Trimeric hexamethylene-1,6-diisocyanate, isocyanate content approx. 23% : Bayer |
| ISONATE 143L - | Polycarbodiimide modified MDI, isocyanate content approx. 29%: Dow Chemical Company |
| TENSILE PROPERTIES - | BS EN ISO 527:1996 |
| FLEXURAL PROPERTIES - | BS EN ISO 178:1997 |
| ADHESION - | BS EN 24624:1993 |

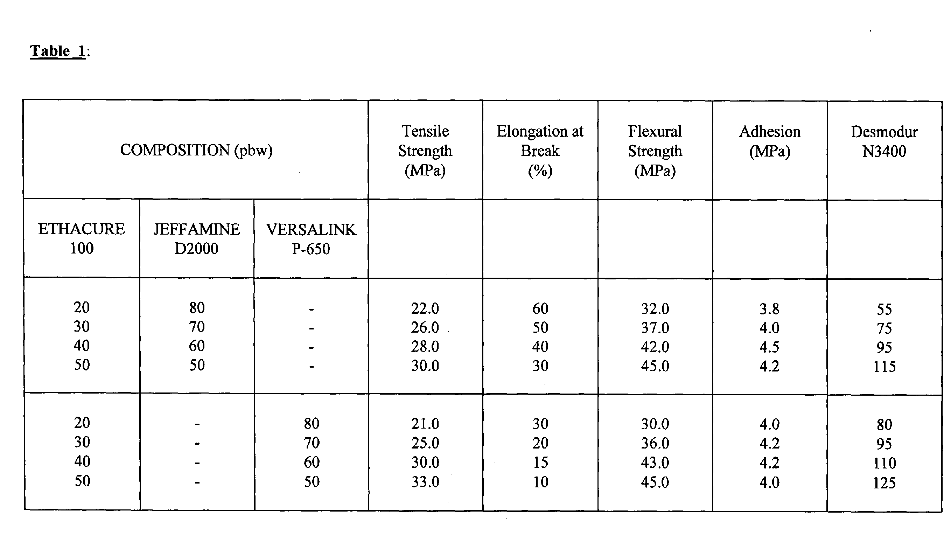

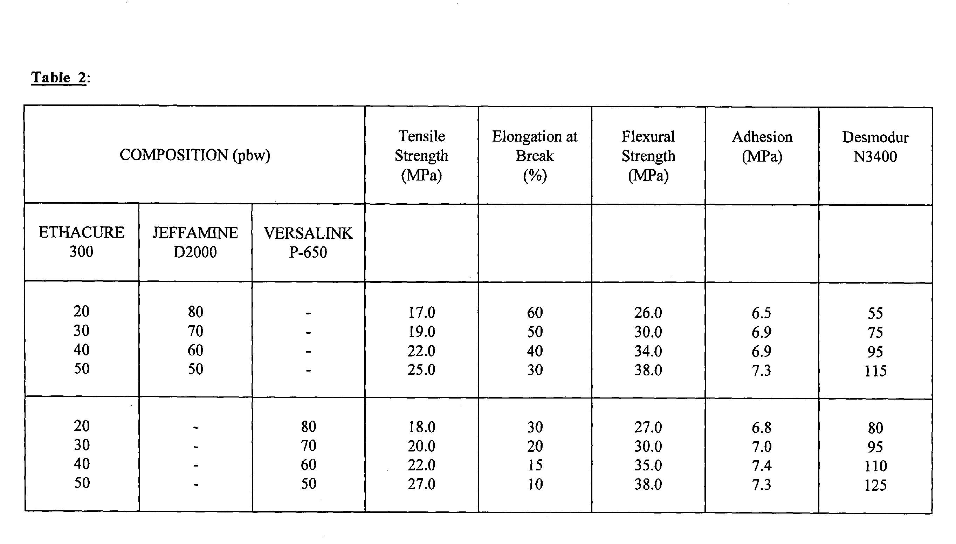

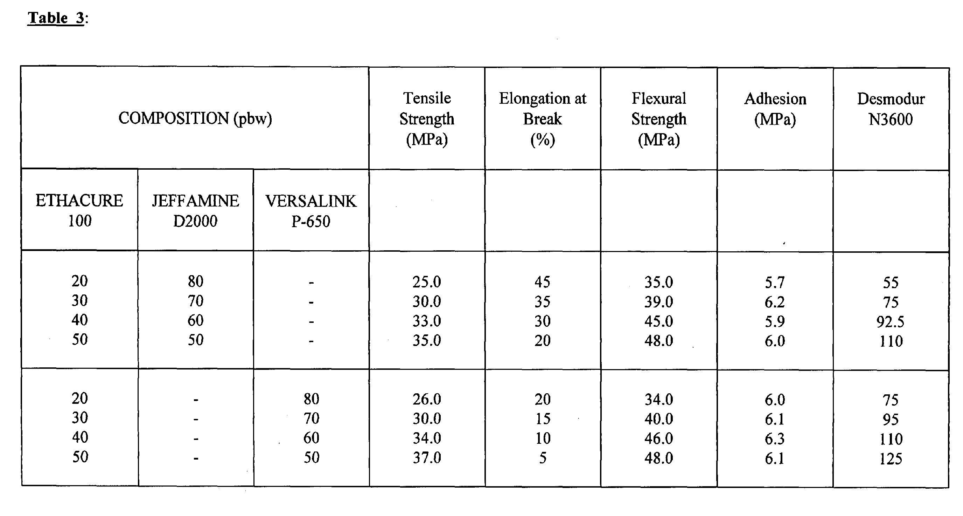

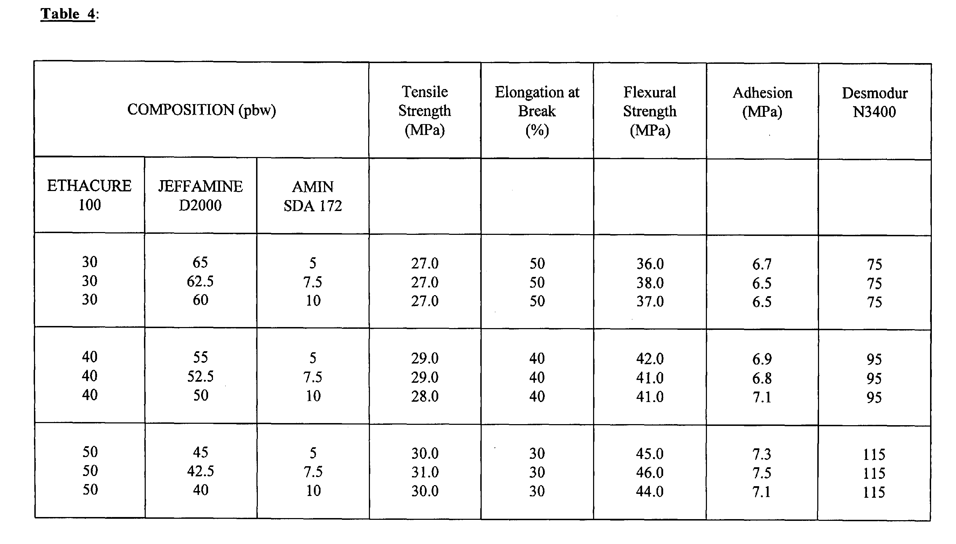

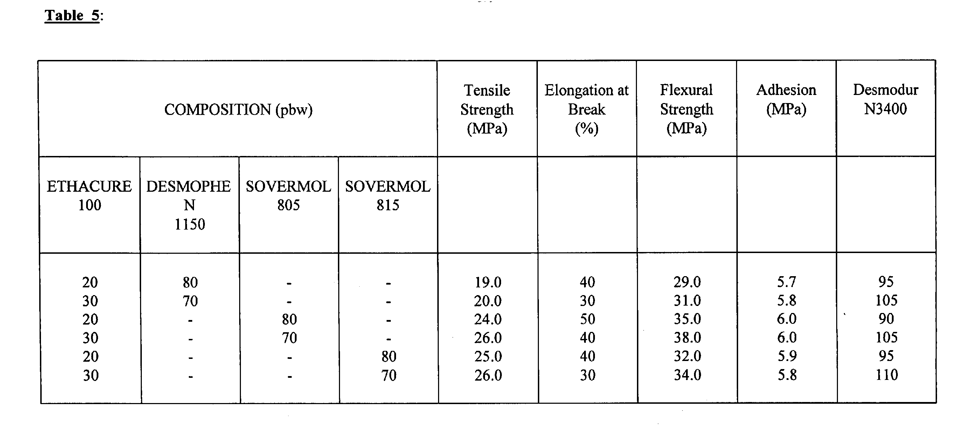

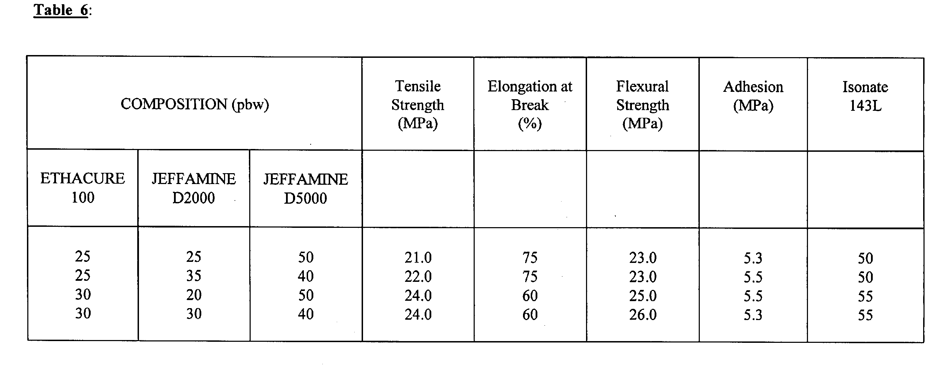

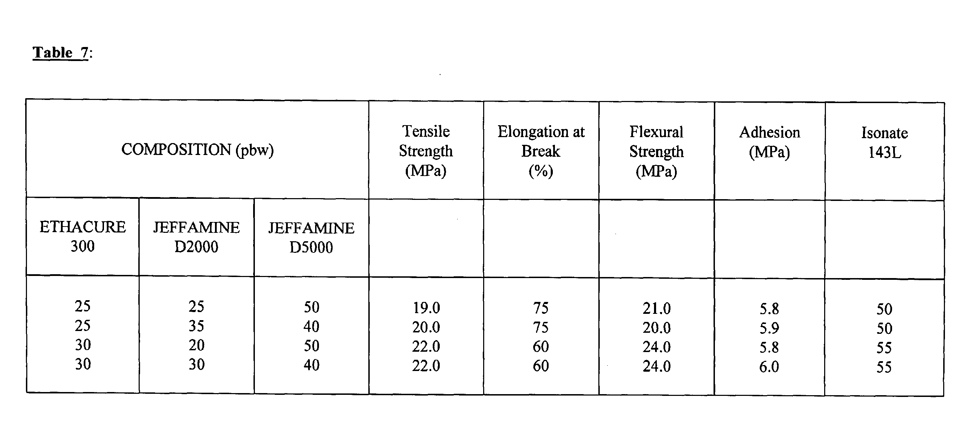

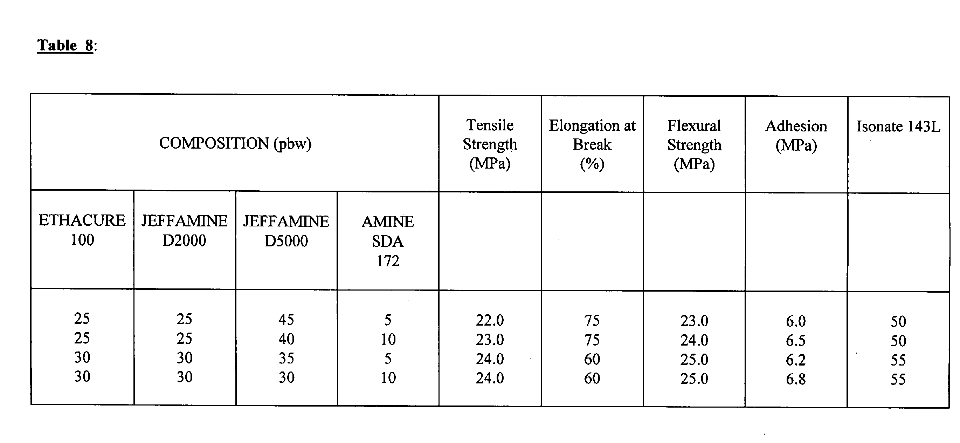

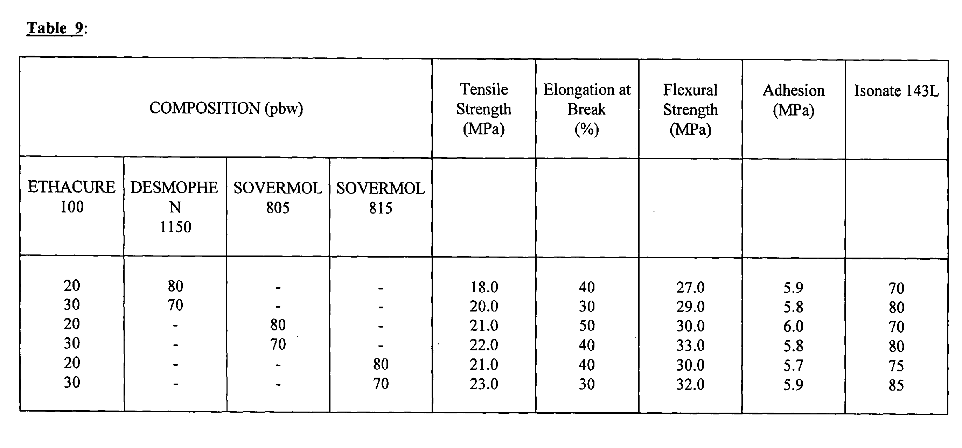

## Claims

1. A method of forming a coating on the internal surface of a cast or ductile iron gas pipeline, the method of comprising the steps of:
a) providing a liquid, two-part coating system
b) mixing together the first part and the second part to form a mixture
c) applying the mixture as a coating to said surface so as to form, at high cure rate, a monolithic, flexible lining which exhibits high strength and a high level of adhesion to the pipe wall.

2. A method according to Claim 1 wherein the first part of the liquid coating system comprises a polyisocyanate.

3. A method according to Claim 1 wherein the second part of the liquid coating system comprises one or more oligomeric polyamines, optionally further blended with a secondary aliphatic polyamine.

4. A method according to Claim 1 wherein the second part of the liquid coating system comprises one or more aromatic polyamines blended with one or more polyhydric alcohol compounds (polyols).

5. A method according to any of Claims 2 wherein said second part comprises a blend of diethyl toluenediamine and poly(oxypropylene )diamine.

6. A method according to any of Claims 2 wherein said second part comprises a blend of diethyl toluene diamine and poly(oxytetramethylene)-di-p-aminobenzoate of approximately 800 molecular weight.

7. A method according to any of Claims 2 wherein said second part comprises a blend of dimethylthio toluenediamine and poly(oxypropylene)diamine of approximately 2000 molecular weight.

8. A method according to any of Claims 2 wherein said second part comprises a blend of dimethylthio toluenediamine and poly(oxytetramethylene)-di-p- aminobenzoate.

9. A method according to any of Claims 2 wherein said second part comprises a blend of diethyl toluenediamine, poly(oxypropylene )diamine of approximately 2000 molecular weight and N,N'-di-tert-butylethylenediamine.

10. A method according to any of Claims 2 wherein said second part comprises a blend of diethyl toluenediamine and polyether-ester polyol.

11. A method according to any of Claims 2 wherein said second part comprises a blend of diethyl toluenediamine, poly(oxypropylene )diamine and poly (oxypropylene) triamine.

12. A method according to any of Claims 2 wherein said second part comprises a blend of dimethylthio toluenediamine, poly(oxypropylene )diamine and poly (oxypropylene) triamine.

13. A method according to any of Claims 2 wherein said second part comprises a blend of diethyl toluenediamine, poly(oxypropylene )diamine, poly (oxypropylene) triamine, and N,N'-di-tert-butylethylenediamine.

14. A method according to any preceding claim wherein the mixture is applied through heated airless spray equipment.
